## Europäisches Patentamt
## European Patent Office
## Office européen des brevets

(19)

(11) Numéro de publication: **0 082 757**
**B1**

(12) # FASCICULE DE BREVET EUROPÉEN

(45) Date de publication du fascicule du brevet:
**13.08.86**

(51) Int. Cl.⁴: **B 29 C 45/16,** B 65 D 47/06

(21) Numéro de dépôt: **82402266.9**

(22) Date de depot: **10.12.82**

(54) **Procédé de fabrication d'un couvercle de récipient pourvu d'un bec verseur escamotable et moule pour la mise en oeuvre de ce procédé.**

(30) Priorité: **23.12.81 FR 8124066**

(43) Date de publication de la demande:
**29.06.83 Bulletin 83/26**

(45) Mention de la délivrance du brevet:
**13.08.86 Bulletin 86/33**

(84) Etats contractants désignés:
**CH DE GB LI NL**

(56) Documents cité:
**DE-A-1 486 350**
**DE-A-2 110 156**
**FR-A-2 223 257**
**FR-A-2 412 400**
**FR-A-2 462 261**

(73) Titulaire: **ALLIBERT S.A. Société anonyme dite:,
129, avenue Léon Blum, F-38042 Grenoble Cedex
(FR)**

(72) Inventeur: **Hemery, André, 25, domaine de la
Courcanne, F-27700 Les Andelys (FR)**
Inventeur: **Gourlin, Benoît, 4, lère Impasse des
Oiseaux, F-27460 Louviers (FR)**

(74) Mandataire: **Lerner, François, 5, rue Jules
Lefebvre, F-75009 Paris (FR)**

EP 0 082 757 B1

LIBER, STOCKHOLM 1986

## Description

La présente invention a pour objet un procédé de fabrication d'un couvercle d'un récipient pourvu d'un bec verseur escamotable et un moule pour la mise en oeuvre de ce procédé.

Il est connu d'emballer des produits liquides ou pulvérulents dans des récipients munis de couvercles étanches, et de pourvoir ceux-ci d'un bec verseur fermé par un opercule et un bouchon. Il est connu de réaliser des becs verseurs de façon qu'ils soient escamotables par retournement partiel en doigt de gant de leur partie cylindro-conique; on évite ainsi toute saillie du bec verseur et de son bouchon au-dessus de la surface supérieure du couvercle, ce qui facilite notamment le gerbage et le stockage des récipients.

Dans les réalisations connues à ce jour, le bec verseur, en matière plastique souple, est moulé séparément puis est fixé de manière à obturer un trou dans le couvercle, lequel est habituellement métallique: Cela entraîne une opération de pose de bec verseur et des précautions pour garantir la bonne fixation mécanique et la bonne étanchéité entre le couvercle et le bec verseur, comme il est décrit, notamment au brevet FR-A-2 223 257.

L'invention a pour objet d'obtenir des couvercles constitués en une première matière plastique de qualité appropriée à l'usage du récipient, ces couvercles étant pourvus d'un bec verseur moulé en une seconde matière plastique souple, de qualité appropriée permettant son escamotage sous le couvercle, le couvercle et son bec verseur constituant une seule et même pièce obtenue directement dans le moule de fabrication du couvercle, assurant une bonne cohésion mécanique du couvercle et du bec verseur et une parfaite étanchéité à la jonction couvercle-bec verseur.

Le procédé de fabrication d'un couvercle d'un recipient pourvu d'un bec verseur escamotable dans lequel le couvercle est formé à l'exclusion du bec verseur en une première matière de qualité appropriée à l'usage du récipient, jusqu'à une limite entourant la base du bec verseur, et ledit bec verseur est formé en une matière plastique souple de qualité appropriée à l'usage du récipient (comme il est décrit au brevet FR-A-2 223 257), se caractérise selon l'invention en ce que ledit couvercle et ledit bec verseur étant moulés dans un seul moule, ledit couvercle étant moulé avant le bec verseur et constitué en une matière plastique moins souple que celle qui constitue le bec verseur, on réalise la jonction desdites deux matières plastiques qui sont compatibles entre elles en faisant pénétrer la seconde matière plastique au coeur d'une surépaisseur ménagée à cet effet dans la première matière plastique autour de la base du bec verseur et avant solidification sensible de cette première matière plastique, et on laisse la deuxième matière pénétrer et se verrouiller de façon étanche au coeur de ladite surépaisseur de la première matière en fin de moulage de ladite seconde matière. Cette façon de faire assure une excellente jonction des deux matières à la fois sur le plan de la résistance mécanique par le moyen d'un "verrouillage" entre les deux matières et sur le plan de l'étanchéité de la jonction, du fait de la compatibilité des deux matières utilisées.

Selon un mode de mise en oeuvre, on obture dans le moule la communication de l'espace de moulage de la première matière et de la deuxième matière au moins tant que ladite première matière n'est pas sensiblement entièrement injectée, et à l'issue du moulage de la première matière, on injecte la seconde matière et on dégage la communication précitée entre l'espace de moulage de la première matière et celui de la seconde matière. De cette façon, on peut régler parfaitement le moment le plus approprié ou sera réalisée la pénétration de la seconde matière dans la première après qu'elle se sera suffisamment refroidie, mais avant qu'elle se soit trop solidifiée.

On connaît déjà d'après le brevet FR-A- 2 412 400 un procédé de moulage de récipients bicolores dans lequel, pour obtenir une zone de jonction d'aspect relativement net en surface, on effectue l'injection à volume déterminé du matériau dela première couleur jusqu'à la zone de jonction que l'on choisit épaisse et on procède à l'injection. ensuite du matériau de la seconde couleur que l'on laisse se souder et pénétrer au sein de la surépaisseur de la première matière en cours de refroidissement. Cependant, il s'agit là de matières plastiques de qualités identiques au colorant près, parfaitement soudables et le seul problème à résoudre concerne l'aspect net en surface de la jonction.

On connaît également d'après le brevet DE-A-2 110 156 un procédé de moulage de pièces composites formées de matières plastiques différentes venant porter étroitement à leur jonction l'une contre l'autre, mais ne comportant pas à l'endroit de cette jonction des différences notables d'épaisseur. Dans cet art antérieur, la jonction-est réalisée par un appui étroit des deux matières dont l'une est surmoulée par dessus l'autre, bord à bord, et qui ne peuvent glisser par suite de la formation d'une-petite languette de la seconde matière pénétrant quelque peu dans la première matière avant sa complète solidification. Un tel procédé ne permet, cependant pas, d'obtenir une parfaite étanchéité de la jonction ni la réalisation d'une jonction de pièces d'épaisseur et de souplesse très différentes.

L'invention vise en outre un moule permettant la mise en oeuvre du procédé mentionné, ce moule se caractérisant en ce qu'il comporte:
- une partie supérieure composée de deux pièces, dont une intérieure et une extérieure,
- une partie inférieure composée de trois pièces dont une intermédiaire annulaire, une extérieure et une intérieure,
lesdites pièces étant séparables selon une direction d'ouverture du moule,
- un espace de moulage pour la partie du couvercle entourant la base du bec verseur compris entre deux pièces supérieures et la pièce inférieure extérieure,

- un espace de moulage pour le bec verseur compris entre la pièce supérieure intérieure et la pièce inférieure intérieure,

- ladite pièce inférieure intermédiaire étant mobile parallèlement à la direction d'ouverture du moule indépendamment des autres parties du moule et ayant une forme annulaire s'insérant entre les pièces inférieures intérieure et extérieure et étant susceptible en relation avec la pièce supérieure intérieure en regard d'obturer ou de dégager la communication entre les deux espaces de moulage qui forme la jonction de base du bec verseur au couvercle.

On connaît déjà, d'après le brevet FR-A-2 462 261 un moule destiné à la fabrication de pièces annulaires comprenant une partie centrale en une première matière plastique et des autres parties entourantes en une seconde matière plastique, ce moule comportant un obturateur annulaire déplaçable axialement sensiblement dans l'axe du moule et susceptible d'obturer ou de dégager la limite entourant la jonction des parties centrales et entourantes.

Cependant ce moule ne permet pas l'injection de la pièce annulaire en deux temps avec retardement du moulage de la partie de jonction permettant une parfaite maîtrise de la réalisation de la jonction étanche.

L'invention apparaîtra plus clairememt à l'aide de la description qui va suivre faite en référence aux dessins annexés, dans lesquels:

- la figure 1 montre en coupe avec arrachment les parties essentielles du moule de fabrication du couvercle dans la région qui doit recevoir le bec verseur, le moule étant montré dans une première position correspondant au début du processus de fabrication;

- la figure 2 est une vue semblable à celle de la figure 1 montrant un stade d'opération suivant, figure dans laquelle les hachures des diverses parties du moule à l'exclusion de la partie formant obturateur ont été omises pour plus de clarté;

- les figures 3 et 4 montrent comme la figure 2 deux phases opératoires successives utilisées jusqu'au stade final de la fabrication;

- la figure 5 est une vue à plus grande échelle du détail entouré V à la figure 3.

Dans l'exemple illustré, on fabrique un couvercle de récipient pourvu d'un bec verseur escamotable à l'intérieur d'un moule constitué essentiellement des pièces repérées 1, 2, 3, 4, 5 sur les figures.

Le moule se compose essentiellement d'une partie supérieure formée des pièces 1 et 2 et d'une partie inférieure formée des pièces 3, 4 et 5, entre lesquelles pièces sont ménagés les espaces de moulage pour le moulage du couvercle et de son bec verseur intégré. Le dispositif de moulage de l'anneau 22 n'a pas été illustré.

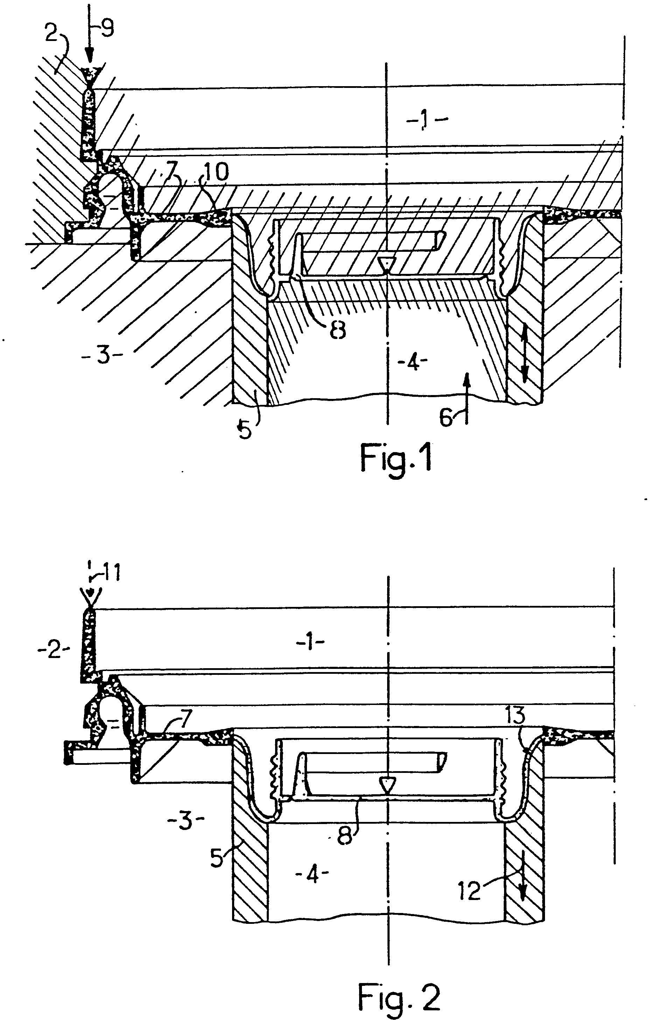

Dans la position illustrée à la figure 1, la pièce 5 formant obturateur annulaire du moule a été repoussée vers le haut dans le sens de la flèche 6 pour venir obturer la communication entre l'espace 7 de moulage de la première matière du couvercle et l'espace 8 de moulage du bec verseur.

Dans cette position du moule et dans un premier temps, on injecte comme indiqué en 9 la première matière plastique dans l'espace de moulage 7 qui viendra former tout le couvercle à l'exclusion du bec verseur. On remarque immédiatement que cet espace présente une plus grande hauteur à l'endroit où sera réalisée la jonction du couvercle avec le bec verseur, de façon à constituer une surépaisseur 10.

Dans le mode de mise en oeuvre illustré aux dessins, après terminaîson de cette première phase d'injection, on arrête l'injection, comme schématisé en 11 à la figure 2, puis on dégage l'obturateur 5 en l'entraînant vers le bas comme indiqué par la flèche 12. La configuration de l'obturateur 5 est choisie de façon à, dans la position d'ouverture de l'obturateur tel qu'illustré à la figure 2, dégager entre la face d'extrémité 13 de l'obturateur et la paroi fixe en regard 1 du moule l'espace de moulage pour la plus grande longueur de la partie 17 retournée du bec escamoté sous le couvercle, lequel espace communique alors avec l'espace 8.

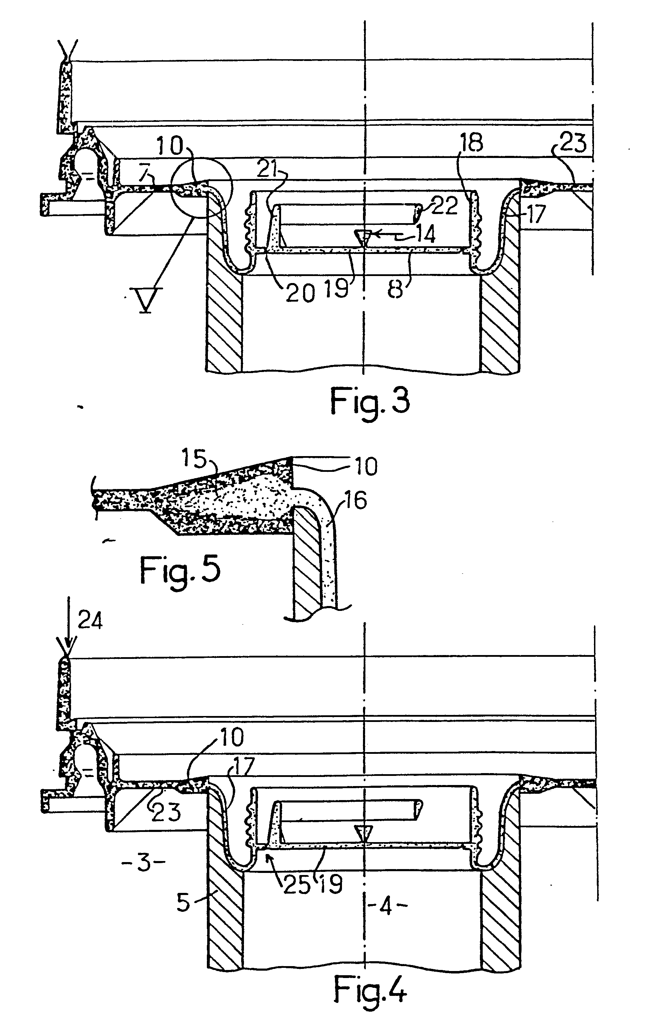

A partir de ce moment, et comme illustré à la figure 3 en 14, on peut injecter la seconde matière plastique souple qui formera le bec verseur escamotable. L'injection est faite avant que la première matière ait eu le temps de se solidifier trop, ce qui permettra à la matière du bec verseur de pénétrer dans celle du couvercle encore visqueuse au coeur de la surépaisseur 10, alors qu'en surface, une peau s'est déjà formée. La pénétration des deux matières apparaît plus clairement à la figure 5 où l'on a différencié les deux matières 15 formant le couvercle et 16 formant le bec verseur.

A la figure 3, on voit clairement le bec verseur constitué de la partie 17 souple retournée en doigt de gant, de la partie 18 formant bec verseur, de la partie 19 formant opercule d'obturation déchirable grâce à l'amorce de déchirure annulaire 20, l'opercule 19 étant solidaire par une partie 21 d'un anneau 22 d'arrachement de l'opercule 19. La forme et la constitution d'un tel bec verseur repéré dans son ensemble 25 sont en elles-mêmes connues.

Lorsque la seconde matière 16 constituant le bec verseur a suffisamment pénétré dans la première matière 15 constituant le couvercle 23 du récipient, on arrête cette pénétration en établissant comme indiqué en 24 à la figure 4 une contre-pression l'injection de la première matière, équilibrant les pressions.

Après refroidissement suffisant, il suffit d'ouvrir le moule pour dégager le couvercle et son bec verseur intégré.

Comme matières appropriées, on peut utiliser par exemple pour former la matière du couvercle 23 un polypropylène ou un polyéthylène haute densité.

Pour seconde matière constituant le bec verseur, on utilisera une matière souple compatible avec la première, telle par exemple qu'un copolymère du genre EEA, c'est-à-dire un copolymère d'éthylène et d'acrylate d'éthyle pouvant contenir par exemple de 4 à 25 % d'EA (acrylate d'éthyle) dans l'EEA (copolymère d'éthylène et d'acrylate d'éthyle).

On peut également utiliser pour constituer cette seconde matière du bec verseur souple un mélange du copolymère EEA susmentionné et de la matière de base du couvercle dans une proportion de 30 à 100 % du copolymère EEA dans le mélange.

En seconde matière, on peut substituer à l'EEA des matières à la fois compatibles avec la première matière et apportant la souplesse requise, telles que caoutchoucs thermoplastiques, des types polystyrène-polybutadiène polystyrène (SBS) ou oléfiniques (polymère d'éthylène-propylène-diène-monomère dits EPDM ou d'éthylène-propolyène dit EPR), polyvinyle acétate d'éthylène ou EVA, résines ionomères, etc...

Diverses variantes peuvent être apportées au procédé et au moule utilisés.

En ce qui concerne le moule, on peut par exemple prévoir que les parties 1 et 2 du moule sont solidaires.

De même, les parties 4, 5 peuvent être solidaires, sous réserve que le profil de la partie 4 permette une course suffisante de l'équipage mobile (habituellement de l'ordre de 1 millimètre) pour assurer la fermeture entre l'espace de moulage 7 du couvercle et l'espace de moulage 8 du bec.

Egalement, bien qu'on ait explicité un processus de moulage en plusieurs temps successifs, dans lequel le moulage du bec est effectué après terminaison du moulage du couvercle, on peut concevoir un processus selon lequel les phases de moulage du couvercle et du bec se chevauchent dans le temps au moins partiellement, pourvu que toutes dispositions soient prises pour qu'on obtienne l'interpénétration juste requise nécessaire et suffisante de la seconde matière 16 dans la première matière 15 sensiblement comme illustré à la figure 5.

**Revendications**

1. - Procédé de fabrication d'un couvercle d'un recipient pourvu d'un bec verseur escamotable, dans lequel le couvercle est formé à l'exclusion du bec verseur, en une première matière de qualité appropriée à l'usage du récipient, jusqu'à une limite entourant la base du bec verseur, et ledit bec verseur est formé en une matière plastique souple de qualité appropriée à l'usage du récipient, caractérisé en ce que ledit couvercle et ledit bec verseur étant moulés dans un seul moule, ledit couvercle étant moulé avant le bec verseur et constitue en une matière plastique (15) moins souple que celle (16) qui constitue le bec verseur, on réalise la jonction desdites deux matières plastiques (15, 16) qui sont compatibles entre elles, en faisant pénétrer la seconde matière plastique (16) au coeur d'une surépaisseur (10) ménagée à cet effet dans la première matière plastique (15) autour de la base du bec verseur et avant solidification sensible de cette première plastique, et on laisse la deuxième matière (16) pénétrer et se verrouiller de façon étanche au coeur de ladite surépaisseur (10) de la première matière (15) en fin de moulage de ladite seconde matière.

2. - Procédé selon la revendication 1, caractérisé en ce qu'on obture dans le moule la communication de l'espace de moulage (7) de la première matière et de l'espace de moulage (8) de la seconde matière au moins tant que ladite première matière n'est pas sensiblement entièrement injectée.

3. - Procédé selon la revendication 2, caractérisé en ce qu'à l'issue du moulage de la première matière (15) on injecte la seconde matière (16) et on degage la communication précitée entre l'espace (7) de la première matière et celui (8) de la seconde matière.

4. - Procédé selon la revendication 2, ou la revendication 3, caractérisé en ce qu'on obture la communication entre les deux espaces de moulage (7, 8) à leur intersection sur une courte longueur.

5. - Procédé selon l'une des revendications précédentes, caractérisé en ce qu'on bloque la pénétration de la deuxieme matière (16) en etablissant une contrepression d'injection de moulage de ladite première matière (15).

6. - Moule pour la mise en oeuvre du procédé selon l'une des revendications précédentes, caractérisé en ce qu'il comporte:
- une partie supérieure composée de deux pièces (1, 2), dont une intérieure (1) et une extérieure (2),
- une partie inférieure composée de trois pièces (3, 4, 5) dont une intermédiaire annulaire (5), une extérieure (3) et une intérieure (4)
lesdites pièces étant séparables selon une direction d'ouverture du moule,
- un espace de moulage (7) pour la partie du couvercle entourant la base du bec verseur compris entre les deux pièces superieures (1, 2) et la pièce inférieure extérieure (3),
- un espace de moulage, (8) pour le bec verseur compris entre la pièce supérieure intérieure et la pièce inférieure intérieure (4),
- ladite pièce inférieure intermédiaire (5) étant mobile parallèlement à la direction d'ouverture du moule, indépendamment des autres pièces du moule (1, 2, 3, 4) et ayant une forme annulaire s'insérant entre les pièces inférieures intérieure et extérieure (3, 4) et étant susceptible en relation avec la pièce supérieure intérieure (1) en regard d'obturer ou de dégager la communication entre les deux espaces de moulage (7, 8) qui forme la limite entourant la jonction de base (17) du bec verseur au couvercle.

7. - Moule selon la revendication 6, caractérisé en ce que la configuration dudit obturateur annulaire (5) est choisie de façon à ménager entre la face d'extrémité (13) de l'obturateur et la paroi en regard de la pièce adjacente (1) du moule, un espace de moulage pour la plus grande longueur 17) de la partie retournée du bec escamotée sous le couvercle en position de fermeture et de stockage du récipient.

## Claims

1. A method of manufacturing a receptacle lid provided with a retractable pourer spout in which the lid, with the exception of the pourer spout, is moulded from a first material of a quality appropriate to the use to which the receptacle is to be put, up to a limit surrounding the base of the pourer spout, the said pourer spout being moulded from a flexible plastics material of a quality appropriate to the use to which the receptacle is to be put, characterised in that as the said lid and the said pourer spout are moulded in a single mould, the said lid being moulded before the pourer spout and consisting of a plastics material (15) which is less flexible than the material (16) used for the pourer spout, the two aforesaid plastics materials (15, 16) which are compatible inter se being joined by causing the second plastics material (16) to penetrate into the heart of an excess thickness (10) provided for the purpose in the first plastics material (15) around the base of the pourer spout and prior to substantial solidification of this first plastic, and in that the second material (16) is caused to penetrate into and become locked in fluidtight fashion within the heart of the said over thickness (10) of the first material (15) upon completion of the moulding of the said second material.

2. Method according to Claim 1, characterised in that in the mould, communication of the moulding space (7) for the first material and the moulding space (8) for the second material is occluded at least until such time as the said first material has been substantially completely injected.

3. Method according to Claim 2, characterised in that upon completion of moulding of the first material (15), the second material (16) is injected and the aforesaid communication is opened up between the space (7) of the first material and that (8) of the second material.

4. Method according to Claim 2 or Claim 3, characterised in that communication is occluded between the two moulding spaces (7, 8) at their intersection and over a short length.

5. Method according to one of the preceding Claims, characterised in that penetration of the second material (16) is stopped by establishing a pressure to counteract moulding injection of the said first material (15).

6. Mould for carrying out the method according to one of the preceding Claims, characterised in that it comprises:
- an upper part composed of two members (1, 2), an inner member (1) and an outer member (2),
- a bottom part composed of three members (3, 4, 5), which are an annular intermediate member (5) an outer member (3) and an inner member (4), the said members being separable in a direction of opening of the mould,
- a moulding space (7) for the part of the lid which surrounds the base of the pourer spout comprised between the two upper members (1, 2) and the outer lower member (3),
- a moulding space (8) for the pourer spout comprised between the inner upper member and the inner lower member (4),
- the intermediate lower member (5) being movable parallel with the direction of opening of the mould, independently of the other members of the mould (1, 2, 3, 4) and having an annular shape for insertion between the inner and outer lower members (3, 4) and being, in relation to the inner upper member (1), capable of occluding or opening-up the communication between the two moulding spaces (7, 8) forming the limit around the junction of the base (17) of the pourer spout with the lid.

7. Mould according to Claim 6, characterised in that the configuration of the said annular occlusion means (5) is such as to provide between the end face (13) of the occluding means and the opposite wall of the adjacent member (1) of the mould a moulding space for the greatest length (17) of the returned part of the spout which is retracted under the lid in a position of closure and storage of the receptacle.

## Patentansprüche

1. Verfahren zur Herstellung eines Behältnisdeckels, der mit einem versenkbaren Ausgießer versehen ist, bei dem der Deckel unter Ausschluß des Ausgießers aus einem ersten Material einer Qualität gebildet wird, die für das Behältnis geeignet ist, bis zu einer die Basis des Ausgießers umgebenden Grenze, und der Ausgießer als einem biegsamen Kunststoffmaterial einer Qualität gebildet wird, die für das Behältnis geeignet ist, dadurch gekennzeichnet, daß der Deckel und der Ausgießer in nur einer Form geformt werden, wobei der Deckel vor dem Ausgießer geformt wird und aus einem weniger biegsamen Kunststoffmaterial (15) besteht als das Material (16), welches den Ausgießer bildet, die Verbindung der zwei Kunststoffmaterialien (15, 16), die untereinander kompatibel sind, dadurch hergestellt wird, daß man das zweite Kunststoffmaterial (16) mitten in eine Überdicke bzw. einen Wulst (10) eintreten läßt, der zu diesem Zweck in dem ersten Kunststoffmaterial (15) um die Basis des Ausgießers herum vorgesehen ist, und im wesentlichen vor dem Erstarren dieses ersten Kunststoffes, und daß man das zweite Material (16) in diesen Wulst (10) des ersten Materials (15) eintreten und sich in dichter Weise abriegeln läßt, damit das genannte zweite Material geformt werden kann.

2. Verfahren nach Anspruch 1, dadurch gekennzeichnet, daß man in der Form die Verbindung des Formraumes (7) des ersten Materials und des Formraumes (8) des zweiten Materials wenigstens so lange verschließ, wie das erste Material noch nicht im wesentlichen vollständig eingespritzt ist.

3. Verfahren nach Anspruch 2, dadurch gekennzeichnet, daß am Ende der Formunq des ersten Materials (15) das zweite Material (16) eingespritzt wird lnd die erwähnte Verbindunq zwischen dem Raum (7) des ersten Materials und dem (8) des zweiten Materials freigelegt wird.

4. Verfahren nach Anspruch 2 oder Anspruch 3, dadurch gekennzeichnet, daß die Verbindung zwischen aen zwei Formungsräumen (7, 8) an ihrem Schnitt auf einer kurzen Länge verschlossen wird.

5. Verfahren nach einem der vorhergehenden Ansprüche, dadurch gekennzeichnet, daß das Eindringen des zweiten Materials (16) dadurch blockiert wird, daß ein Einspritzgegendruck für das Formen des ersten Materials (15) eingerichtet wird.

6. Form zur Durchführung des Verfahrens nach einem der vorhergehenden Ansprüche, dadurch gekennzeichnet, daß folgende Teile vorgesehen sind:
- ein oberes Teil, das als zwei Stücken (1, 2) zusammengesetzt ist, ein inneres (1) und ein äußeres (2),
- ein unteres Teil, das aus drei Stücken (3, 4, 5) zusammenqesetzt ist, ein ringförmiges Zwischenstück (5), ein äußeres Stück (3) und ein inneres Stück (4), wobei die Stücke nach einer Formöffnungsrichtung trennbar sind,
- einen Formungsraum (7) für denjenigen Teil des Deckels, welcher die Basis des Ausgießers umgibt, nämlich zwischen den zwei oberen Stücken (1, 2) und dem äußeren unteren Stück (3),
- einen Formungsraum (8) für den Ausgießer zwischen dem oberen inneren und dem unteren inneren Stück (4),
-wobei das untere Zwischenstück (5) beweglich parallel zur Öffnungsrichtung der Form ist, unabhängig von den anderen Stücken der Form (1, 2, 3, 4) und Ringform hat, sich zwischen die unteren inneren und äußeren Stücke (3, 4) einfügt und geeignet ist in Verbindung mit dem oberen inneren Stück (1) für das Verschließen oder Freigeben der Verbindung zwischen den zwei Formungsräumen (7, 8), die die Grenze bildet, welche die Verbindung der Basis (17) des Ausgießers mit dem Deckel umgibt.

7. Form nach Anspruch 6, dadurch gekennzeichnet, daß die Gestalt des ringförmigen Verschlußstückes (5) derart ausgewählt ist, daß zwischen der Endfläche (13) des Verschlußstückes und der Wand im Hinblick auf das angrenzende Stück (1) der Form ein Formungsraum für die größere Länge (17) des umgedrehten Teils des Ausgießers vorgesehen ist, der unter den Deckel in Schließ- und Lagerposition des Behältnisses versenkt ist.

Fig. 1

Fig. 2

**Fig. 3**

**Fig. 5**

**Fig. 4**